# EUROPÄISCHE PATENTSCHRIFT

(11) **EP 1 412 117 B1**
(45) Veröffentlichungstag und Bekanntmachung des Hinweises auf die Patenterteilung: **26.04.2006**
(21) Anmeldenummer: 02791465.4
(22) Anmeldetag: 20.07.2002
(51) Int. Cl.: B23B 31/20

(54) **DISTANZELEMENT FÜR EINE SPANNZANGE UND SPANNZANGE**
SPACER ELEMENT FOR A COLLET CHUCK AND COLLET CHUCK
ELEMENT D'ECARTEMENT POUR UNE PINCE DE SERRAGE ET PINCE DE SERRAGE

(30) Priorität: 27.07.2001 DE 10138330
(43) Veröffentlichungstag der Anmeldung: 28.04.2004
(73) Patentinhaber: HAINBUCH GMBH SPANNENDE TECHNIK, D-71672 Marbach (DE)
(72) Erfinder: WELLER, Hans-Michael, 71672 Marbach (DE)
(74) Vertreter: Renger, Florian
(86) Internationale Anmeldenummer: PCT/EP2002/008105
(87) Internationale Veröffentlichungsnummer: WO 2003/011503

(56) Entgegenhaltungen:
- DE-B- 1 085 008
- FR-A- 2 517 576
- US-A- 4 858 938

## Beschreibung

Die vorliegende Erfindung betrifft ein Distanzelement für eine Spannzange nach dem Oberbegriff des Anspruchs 1 sowie eine Spannzange, wie sie insbesondere für Ausspannen von Werkstücken verwendet wird.

Spannzangen bestehen vielfach aus mehreren zusammenwirkenden Spannsegmenten, die relativ zueinander verschiebbar angeordnet sind, um beispielsweise Werkstücke unterschiedlicher Größe, Kraft und/oder Form schlüssig zu halten.

Derartige Verbindungen zwischen Spannsegmenten werden beispielsweise durch entsprechende elastische Distanzelemente hergestellt, die die Spannsegmente miteinander verbinden. Diese elastomeren Distanzelemente können dabei formschlüssig in den Spannsegmenten gehalten werden. Dazu weisen die Spannsegmente entsprechende Hinterschneidungen auf.

Derartige elastomere Distanzelemente in Verbindung mit Spannzangen sind beispielsweise aus der US 4,858,938 bekannt. Die aus dem elastomeren Material bestehenden Distanzelemente sind dabei lose in die entsprechenden Hinterschneidungen und Ausnehmungen der Spannsegmente eingelegt. Aufgrund der Tatsache, dass die elastischen Distanzelemente über keine große Verbindungskraft verfügen, besteht im ungebauten Zustand der Spannzange die Gefahr, dass beispielsweise beim Transport bei den Spannzangen der Zusammenhalt zwischen den Spannsegmenten verloren geht Diese lose Verbindung ist deshalb einerseits wünschenswert, weil aus Verschleißgründen ein leichter und einfacher Austausch der Distanzelemente möglich sein soll. Andererseits muss aufgrund des losen Zusammenhalts und aufgrund des Verlustes des Zusammenhalts zwischen den Spannsegmenten beim Transport vor jedem Gebrauch die Spannzange neu montiert werden. Hierdurch entsteht ein unnötig hoher Rüstaufwand. Bei großen und schweren Zangen kann auch aufgrund des nicht immer ausreichenden Zusammenhalts durch den Verlust der Verbindung zwischen den Spannsegmenten eine Verletzungsgefahr für den Bediener entstehen.

### Aufgabe und Lösung

Aufgabe der Erfindung ist es daher, ein vorgenanntes Distanzelement sowie eine Spannzange mit einer Verbindung zwischen den Spannsegmenten einer Spannzange zu schaffen, wobei die Verbindung einerseits zum Lösen der Distanzelemente zwischen den Verbindungsstücken leicht lösbar ist, andererseits die Spannzange leicht montierbar ist und auch im ungespannten Zustand der Spannzange sicheren Halt bietet.

Diese Aufgabe wird durch ein Distanzelement für eine Spannzange mit den Merkmalen des Anspruchs 1 sowie eine Spannzange mit den Merkmalen des Anspruchs 9 gelöst. Bevorzugte sowie vorteilhafte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Ein Distanzelement gemäß der Erfindung weist zur formschlüssigen Verbindung zweier einander benachbarter Spannsegmente einer Spannzange an zwei einander gegenüberliegenden Seiten eines Verbindungssegmentes Formabschnitte auf. Das Distanzelement besteht dabei aus flexiblem oder elastomerem Material. Die Formabschnitte weisen jeweils wenigstens eine Öffnung oder Ausnehmung zum Einführen je eines aufweitenden Bauteils oder Elements, beispielsweise eines Spreizdornes, auf. Dadurch kann der Formabschnitt geweitet bzw. gespreizt werden.

Gemäß weiterführender Ausgestaltung sind an den Ausnehmungen Gleitflächen vorgesehen. Die Gleitflächen sind dabei insbesondere im Kontaktbereich zwischen Spreizdorn und Ausnehmung ausgebildet. Dabei bestehen die Gleitflächen vorzugsweise aus nicht elastomerem Material, insbesondere sind sie metallisch. Die Gleichflächen können dabei im Bereich der Ausnehmungen an den Distanzelementen unlösbar, beispielsweise durch Verkleben oder Anvulkanisieren bzw. Anspritzen, befestigt sein.

Bei einer bevorzugten Ausgestaltung der Erfindung sind die Gleitflächen in Form eines zusammenhängenden und vorteilhaft einstückigen Zwischenstückes ausgebildet. Das Zwischenstück kann dabei als im Querschnitt rundes oder elliptisches, insbesondere kreisförmiges, Rohr ausgebildet sein. Das Rohr kann sich dabei in axialer Richtung über die gesamte Länge der Ausnehmung erstrecken.

Das Zwischenstück kann vorteilhaft einen sich über die axiale Länge erstreckenden Schlitz aufweisen. Der Schlitz verläuft dabei insbesondere linear axial über die gesamte Länge des Zwischenstückes. Alternativ hierzu kann der Schlitz spiralig gewendelt ausgebildet sein. Die spiralige Wendelung kann vorteilhaft so ausgebildet sein, dass über die axiale Länge hinweg genau eine Umdrehung der axialen Wendel verläuft. Durch diese Maßnahme wird zum einen sichergestellt, dass das Zwischenstück gut spreizbar und verformbar ist. Zum anderen ist über die gesamte Länge der Ausnehmung hinweg gesehen in jedem Punkt des Umfanges zumindest auf einem Teilweg eine Abstützung des Distanzelementes an dem Zwischenstück gewährleistet. So wird einigermaßen zuverlässig ein Kontakt zwischen dem Distanzelement selbst und dem Spreizdorn in Ruhelage des Spreizdornes vermieden.

Eine bevorzugte Ausführungsform eines Distanzelementes ist im Querschnitt knochenförmig ausgebildet. Sie weist zwei verdickte, gerundete Endbereiche auf, welche Formabschnitte bilden. Des weiteren weist sie einen zwischen den Formabschnitten ausgebildeten Steg auf, der das Verbindungsstück zwischen den Formabschnitten bildet. Dabei weist vorzugsweise jeder der verdickten Endbereiche eine mittig angeordnete, den Endbereich axial durchsetzende, vorzugsweise rund oder elliptisch, insbesondere langlochförmig oder kreisförmig, ausgebildete Bohrung auf. An den Innenseiten der Bohrung ist vorzugsweise ein rohrförmiges, axial gestütztes Zwischenstück angeordnet.

Eine Spannzange gemäß der Erfindung dient insbesondere dem Aufspannen von Werkstücken. Eine derartige Spannzange weist wenigstens zwei Spannsegmente auf. Benachbarte Spannsegmente sind mittels elastischer Distanzelemente miteinander verbunden. Dabei können die Distanzelemente wie vorbeschrieben ausgebildet sein.

Die Spannsegmente weisen Hinterschneidungen auf, während die Distanzelemente entsprechend geformte Formabschnitte aufweisen, so dass ein formschlüssiger Eingriff der Formabschnitte der Distanzelemente in die Hinterschneidungen der Spannsegmente möglich ist. Gemäß der Erfindung ist ein Spreizdorn vorgesehen, der im Bereich der Hinterschneidungen einführbar ist und für die Herstellung einer kraftschlüssigen Verbindung zwischen Spannsegment und Distanzelement sorgt. Gemäß der Erfindung besteht also nicht mehr nur eine formschlüssige, sondern zusätzlich auch eine kraftschlüssige Verbindung zwischen dem Spannsegment und dem Distanzelement. Dabei begrenzt sich der Kraftschluss auf den Bereich der Hinterschneidungen im Spannsegment.

Dadurch, dass die kraftschlüssige Verbindung durch das Einführen des Spreizdorns in den Bereich der Hinterschneidungen erfolgt, wird zum einen ergänzend zu der formschlüssigen Verbindung zwischen dem Distanzelement und dem Spannsegment eine kraftschlüssige Verbindung hergestellt. Diese Verbindung ist aber dadurch leicht lösbar, dass der Kraftschluss aufgehoben wird, sobald der Spreizdorn entfernt wird. In diesem Fall ist wiederum nur noch die formschlüssige Verbindung zwischen dem Distanzelement und dem Spannsegment gegeben. In diesem Zustand ist der Spannkopf, der aus den Distanzelementen und den. Spannsegmenten besteht, leicht montierbar und demontierbar. Es ist vor allem ohne großen Aufwand möglich, ermüdete oder beschädigte Distanzelemente auch einzeln auszutauschen. Erst durch das Einsetzen der Spreizdorne an den dafür vorgesehenen Stellen wird auch die kraftschlüssige Verbindung erzeugt, so dass dann ein sicherer Montagezustand der Spannzange gegeben ist.

Gemäß vorteilhafter Ausgestaltung der Erfindung ist zwischen dem Spreizdorn und dem Distanzelement eine Gleitfläche vorgesehen. Die Gleitfläche kann dabei in Form eines einteilig ausgebildeten Zwischenstückes gestaltet sein. Dabei bestehen die Gleitflächen des Zwischenstückes, entlang derer der Spreizdorn beim Einführen in die dafür vorgesehene Aufnahme entlang fährt, aus einem nicht-elastomeren Material. Die Aufgabe dieses Zwischenstücks bzw. der an dem Distanzelement ausgebildeten Gleitflächen ist es, dafür zu sorgen, dass der Spreizdorn möglichst ohne größeren Reibungswiderstand und ohne Verformungen oder Verspannungen des Distanzelementes in die entsprechende Stellung einführbar ist. Die Gleitfläche bzw. das Zwischenstück sind insbesondere aus einem metallischen Material, das einen geringen Reibungswiderstand bezüglich des Spreizdornes aufweist. In Frage kommt auch ein leicht verformbares Metall, beispielsweise Aluminium. Das hat den Vorteil, dass ein derartiges Zwischenstück leicht ist und auch leicht verformbar ist. Das kann beispielsweise erforderlich sein, um den Kraftschluss zwischen dem Distanzelement und dem Spannsegment herzustellen.

Als weiterführende Ausgestaltung der Erfindung ist vorgesehen, dass der Spreizdorn zwischen Spannsegment und Distanzelement im Bereich der Hinterschneidung gehalten ist und die kraftschlüssige Verbindung zwischen Spannsegment und Distanzelement herstellt. Alternativ zu dieser Möglichkeit kann vorgesehen sein, dass das Distanzelement eine Ausnehmung aufweist, in welche der Spreizdorn einführbar ist., Der Spreizdorn ist innerhalb der Ausnehmung vollständig von dem Distanzelement umschlossen. Dabei ist vorzugsweise die Ausnehmung im Distanzelement in dem Bereich ausgebildet, in dem der Spreizdorn in die Hinterschneidung des Spannsegmentes eingreift. Dabei kann gemäß weiterführender Ausgestaltung der Erfindung vorgesehen sein, dass die kraftschlüssige Verbindung zwischen dem Distanzelement und dem Spannsegment durch elastisches Verformen der Ausnehmung herstellbar ist. Eine solche Ausführungsform kann insbesondere dann vorteilhaft sein, wenn das Distanzelement knochenförmig ist. Dabei greifen die gerundeten Enden der Knochenform jeweils in die Hinterschneidungen eines Spannsegmentes ein, wobei sich zwischen den gerundeten Stellen ein im wesentlichen rechteckiger Verbindungsabschnitt befindet. Jeder der gerundeten Endabschnitte kann eine Ausnehmung aufweisen.

Die Ausnehmung kann rund und insbesondere oval, beispielsweise ähnlich einem Langloch, ausgebildet sein. Dabei verläuft vorzugsweise die längere Hauptachse der Rundung oder des Ovals in der Richtung des Verbindungssegments zwischen den zwei runden Enden. Im Inneren der Ausnehmung ist vorteilhaft ein Distanzelement angeordnet, das aus einem entsprechend geformten, einen durchgehenden axialen Schlitz aufweisenden, Metallkörper besteht. In das Innere dieses Metallkörpers ist der Spreizdorn, der der Form der Ausnehmung entsprechend geformt ist, einführbar. Durch Verdrehen des Spreizdornes nach Beendigung der Einführung um einen Winkel von 90° wird das gerundete Ende des knochenförmigen Endes des Distanzelementes so verformt, dass eine kraftschlüssige Verbindung zwischen dem Distanzelement und dem Spannsegment entsteht. Das Spannsegment weist nämlich eine der Außenkontur des knochenförmigen Distanzelementes entsprechende Ausnehmung auf, die also im Querschnitt ungefähr kreisförmig ist, in welche das Distanzelement einführbar ist. Durch das Verdrehen des Spreizdornes wird eine Verringerung des Durchmessers des elastomeren Teiles des Distanzelementes zwischen der Ausnehmung und dem Spannsegment in dem Bereich der größten Breite des Spanndornes erzeugt. In diesem Abschnitt wird dann die kraftschlüssige Verbindung hergestellt. Der Kraft- und Formschluss kann insbesondere dann besonders sicher gestaltet werden, wenn die Hinterschneidung des Spannsegmentes, die der Aufnahme des gerundeten Endes des knochenförmigen Spannsegmentes dient, eine Öffnung nach außen aufweist, deren Breite geringer ist als die längste Achse des Spreizdorns, also die längste Erstreckung der langlochförmigen Ausnehmung.

Gemäß der Erfindung ist vorzugsweise vorgesehen, dass jeweils zwischen zwei benachbarten Spannsegmenten ein Distanzelement angeordnet und das Distanzelement in jedem der beiden Spannsegmente form- und kraftschlüssig gehalten ist.

Besonders vorteilhaft weist eine Spannzange ein eingangs beschriebenes Distanzelement auf. Dieses kann eines oder mehrere der genannten Merkmale aufweisen.

### Kurzbeschreibung der Zeichnungen

Ausführungsbeispiele der Erfindung sind in den Zeichnungen dargestellt und werden im folgenden näher erläutert. Dabei zeigen:
- Fig. 1: in Querschnittsnachstellung eine schematische Darstellung einer erfindungsgemäßen form- und kraftschlüssigen Verbindung zwischen zwei Spannsegmenten einer Spannzange mittels eines knochenförmigen Distanzelements,
- Fig. 2: in schematischer dreidimensionaler Durchsichts-Darstellung die form- und kraftschlüssige Verbindung zwischen einem Spannsegment und einem Distanzelement mittels eines in eine Ausnehmung einführbaren Spreizdornes gemäß einer ersten Ausführungsform,
- Fig. 3: eine zweite Ausführungsform einer form- und kraftschlüssigen Verbindung zwischen Spannsegment und Distanzelement,
- Fig. 4/5: eine dritte Ausführungsform einer form- und kraftflüssigen Verbindung zwischen Spannsegment und Distanzelement in gelöster Zwischenstellung und Befestigungsendlage und
- Fig. 6: eine Vorderansicht einer Spannzange mit mehreren Spannsegmenten, wobei jeweils benachbarte Spannsegmente über ein Distanzelement miteinander verbunden ist.

### Detaillierte Beschreibung der Ausführungsbeispiele

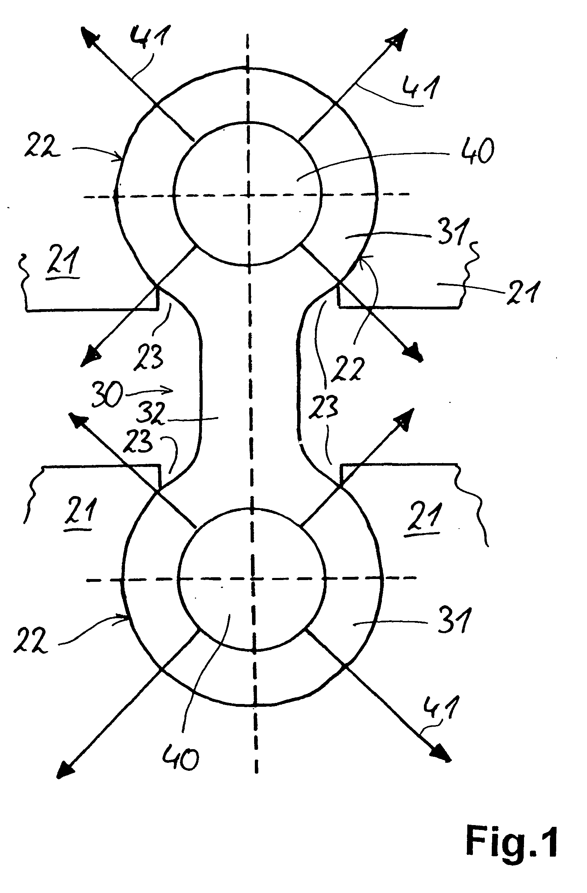

Die Fig. 1 zeigt in einer Draufsicht zwei Spannsegmente 21 einer Spannzange 20. Jedes dieser Spannsegmente weist eine Hinterschneidung 22 auf. Die Hinterschneidung kann dabei entweder axial oder radial zur Hauptachse der Spannzange 20 ausgebildet sein. Die in dieser Figur wie auch in den weiteren Ausführungsformen der Erfindung dargestellten Ausführungsbeispiele sind dabei im wesentlichen unabhängig davon, ob die Spannsegmente 21 mit den Distanzelementen 30 axial oder radial bezüglich der Hauptachse der Spannzange 20 ausgerichtet sind. Die Hinterschneidung 22 ist dabei gemäß dem dargestellten Ausführungsbeispiel als zylindrische Ausnehmung ausgebildet, die sich längs ihrer Zylinderachse erstreckt, die in der Draufsicht senkrecht zur Zeichnungsebene ausgerichtet ist. Wie vorstehend bereits gesagt, ist es dabei unerheblich, ob die Erstreckungsachse der Hinterschneidung axial, also parallel zur Hauptachse der Spannzange 20, oder radial hierzu ausgebildet ist.

Zwischen den beiden Spannsegmenten 21 ist das Distanzelement 30 angeordnet. Das Distanzelement 30 besteht aus zwei verdickten Endbereichen und einem diese Endbereiche verbindenden Verbindungsstück 32. Die Außenkontur der verdickten Endbereiche 31 ist dabei so geformt, dass sie in die Hinterschneidung 22 der Spannsegmente 21 einführbar ist und zumindest teilweise formschlüssig an ihr anliegt. Die Hinterschneidungen 22 der Spannsegmente 21 weisen jeweils eine Öffnung 23 zur Außenseite des Spannsegmentes 21 hin auf. Im Bereich dieser Öffnung 23 erstreckt sich das Verbindungsstück 32 des Distanzelementes 30, das die gefertigten Endbereiche 31 miteinander verbindet. Insgesamt gesehen ist das Distanzelement 30 also knochenförmig ausgebildet. Das Verbindungsstück 32 selber ist in der Draufsicht im wesentlichen quaderförmig ausgestaltet. Die Elastizität des Materials des Verbindungsstücks 32 bestimmt im wesentlichen die Elastizität und die Kräfte zwischen den Spannsegmenten 21 und daher auch die Dämpfungseigenschaften der Spannzange 20 selber. Über die Materialstärke und auch die Zähigkeit des Materials, vor allem des Distanzelements 30, insbesondere im Bereich des Verbindungsstücks 32, aber auch im Übergangsbereich zwischen den verdickten Endbereichen 31 und dem Verbindungsstück 32, wird die Haltbarkeit und Zähigkeit des Distanzelementes bestimmt. Das Distanzelement selbst ist ein Verschleißteil, das regelmäßig auszutauschen ist.

Jeweils im verdickten Endbereich 31, insbesondere mittig in diesem fertigen Endbereich 31, weist das Distanzelement 30 eine axial verlaufende Bohrung 33 auf, die zur Aufnahme eines Spreizdornes 40 bestimmt ist. Dabei entspricht die Außenkontur des Spreizdorns 40 der Innenkontur der Bohrung 33. Der Durchmesser des Spreizdornes 40 weist jedoch gegenüber dem Innendurchmesser der Bohrung 33 des Distanzelementes 30 ein gewisses Übermaß auf. Die Größe dieses Übermaßes bestimmt sich in Abhängigkeit von den Materialeigenschaften des Distanzelementes 30 und den aufzubringenden Verformungskräften und den Kräften, die für die Herstellung der kraftschlüssigen Verbindung aufgebracht werden sollen. Mit den Pfeilen 41 ist angedeutet, dass die aufgrund des unterschiedlichen Durchmessers entstandenen Kräfte, die von dem Spreizdorn auf das Distanzelement einwirken, im gesamten Bereich, in dem das Distanzelement formschlüssig an der Hinterschneidung 22 anliegt, eine Haltekraft aufbringen. Somit ist nach Einführen des Spreizdornes in der dargestellten Ausführungsform auf jeden Fall eine mechanisch sichere Halterung des Materials gewährleistet.

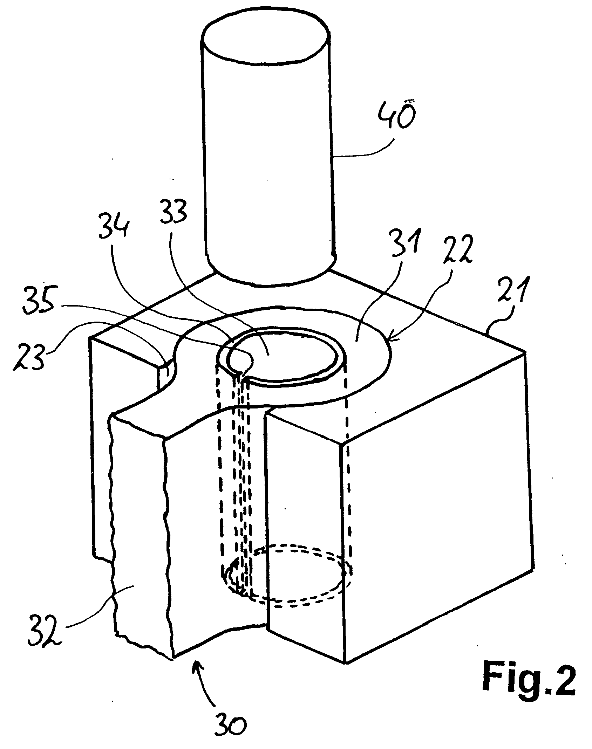

In der Fig. 2 ist im wesentlichen entsprechend der Fig. 1 eine perspektivische Ansicht eines Spannsegmentes 22 dargestellt, das mit einem Distanzelement zusammenwirkt.

Das Spannsegment 21 weist eine Hinterschneidung 22 auf, in die das Distanzelement 30 eingeführt ist. Das Distanzelement 30 weist mittig in dem formschlüssig an der Hinterschneidung 22 anliegenden verdickten Endbereich 31 eine Bohrung 33 auf, die das Distanzelement 30 axial durchsetzt. Dabei ist die Bohrungsachse der Bohrung 33 im wesentlichen parallel zur Mittelachse der Hinterschneidung ausgerichtet und verläuft zentrisch in der Hinterschneidung 22. Im Bereich der Bohrung ist ein Zwischenstück 34 im Distanzelement 30 angeordnet. Das Zwischenstück 34 erstreckt sich axial über die gesamte Länge des Distanzelementes 30. Auch radial ist das Zwischenstück 34 durch einen axial verlaufenden schmalen Schlitz 35 unterbrochen. Der Schlitz 35 kann so ausgebildet sein, dass er sich über die gesamte axiale Länge des Zwischenstückes hinweg durchgängig erstreckt. Jedoch kann auch eine andere geeignete Gestaltung des Schlitzes, z.B. einen axial gewendelten, spiralförmigen Verlauf, oder aber über eine gezackte Form des Schlitzes, bei dem Zacken oder Zähne wechselweise von beiden Seiten über die Mitte hinausragen, vorgesehen sein. Dadurch kann erreicht werden, dass in axialer Sicht gesehen über die gesamte Umfangsstrecke jeweils in wenigstens einem Punkt oder in wenigstens einem Teil der axialen Länge des Distanzelementes ein Abschnitt des Zwischenstückes liegt. Das Zwischenstück dient als Gleitelement oder Gleitlager zwischen dem Spreizdorn 40 und dem Distanzelement 30 um die Reibung zu reduzieren, welche vor allem bei elastomerem Material oder Gummi sehr hoch wäre. Das Zwischenstück ist insbesondere fest, beispielsweise durch Anvulkanisieren oder durch Verkleben, mit dem restlichen Distanzelement 30 verbunden. Das Zwischenstück selbst besteht vorzugsweise aus einem metallischen Material, beispielsweise dünnem Aluminium.

Der Spreizdorn 40 weist einen Außendurchmesser auf, der größer ist als der Ausgangs-Innendurchmesser des Distanzelementes 30, also der Innendurchmesser des rohrförmig ausgebildeten Zwischenstücks 34.

Um eine gute Einführbarkeit des Spreizdorns 40 zu gewährleisten, kann der Spreizdorn 40 so ausgebildet sein, dass er sich konisch aufweitet. Das vordere Ende des Spreizdornes 40, das zuerst in das Innere der Bohrung 33 eingeführt werden würde, hätte somit einen geringeren Außendurchmesser als der Innendurchmesser der Bohrung 33 im äußeren, dem Spreizdorn 40 zugewandten Bereich.

Um dennoch eine Anlage des Spreizdorns 40 über die gesamte Länge der Bohrung 33 hinweg zu gewährleisten, ist es möglich, dass sich die Bohrung ebenfalls über ihre axiale Länge hinweg konisch verjüngt. Damit jedoch ein gleichmäßiger Sitz des Distanzelementes über die gesamte axiale Erstreckung hinweg in dem Spannsegment 21 gegeben ist und sich die Federkräfte nicht durch eine dicker werdende Schicht des Materials des Distanzelementes verändern, ist es ebenfalls möglich, dass sich nicht nur die Bohrung 33, sondern auch das Distanzelement 30 konisch verjüngt. Um eine entsprechende formschlüssige Anlage des Distanzelementes 30 im Bereich der Hinterschneidung 22 des Spannsegmentes 21 zu erreichen, kann darüber hinaus auch diese Hinterschneidung 22 nicht zylindrisch, sondern sich ebenfalls über die axiale Länge hinweg verjüngend, z.B. kegelförmig, ausgebildet sein. In der eingeführten Endlage des Spreizdorns 40 ist es jedoch so, dass der Außendurchmesser des Spreizdorns 40 in jedem axialen Punkt größer ist als die ursprüngliche lichte Weite der Bohrung 33 und somit des Zwischenstücks 34 in diesem Punkt.

Durch das Einführen des Spreizdornes in das Distanzelement wird die formschlüssige Verbindung zwischen dem Distanzelement und dem Spannsegment 21 durch eine hinzukommende kraftschlüssige Verbindung ergänzt.

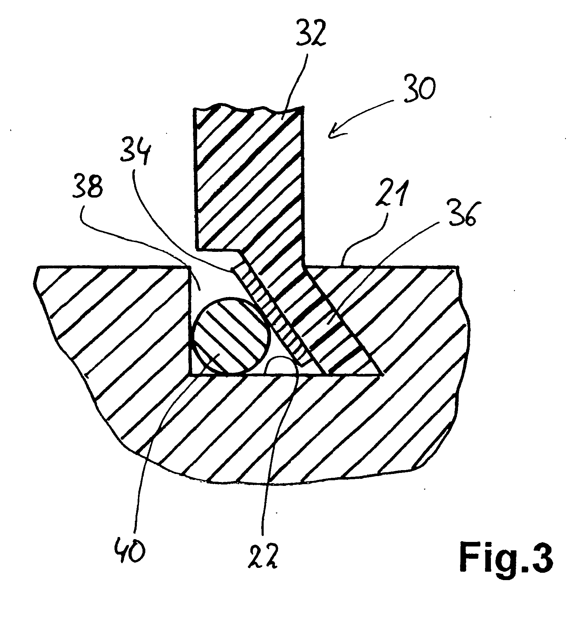

Die Fig. 3 zeigt eine andere Ausführungsform einer form- und kraftschlüssigen Verbindung zwischen einem Distanzelement 30 und einem Spannsegment 21. Das Spannsegment 21 weist eine Hinterschneidung auf 22, die nutartig ausgestaltet ist, wobei wenigstens einer der Schenkel der Nut so angeschrägt ist, dass im Nutgrund eine größere Nutweite gegeben ist als am oberen Nutrand. Das Distanzelement 30 besteht aus einem Verbindungsabschnitt 32, der wenigstens nahezu bis an den oberen Nutrand heranragt, der durch die Außenkontur 24 des Spannsegmentes 21 gebildet wird. Das Verbindungsstück 32 ist quaderförmig ausgebildet. Das Distanzelement 30 weist dann einen Formabschnitt 36 auf, der zur Schrägung der Nutseite hin parallel verläuft und somit formschlüssig an dem schrägen Nutbereich anliegt. An der der Schrägung abgewandten Innenseite des Formabschnittes 36 ist eine Gleitfläche 34, beispielsweise aus einem metallischen Material, unverlierbar befestigt. Im Bereich dieser Gleitfläche 34 weist das Distanzelement 30 eine Ausnehmung 38 auf, so dass durch das Distanzelement 30 wenigstens ein Teil des Nutbereiches nicht ausgefüllt wird. In diese Ausnehmung 38 ist der Spreizdorn 40 einführbar. Der Spreizdorn 40 liegt in dem dargestellten Ausführungsbeispiel entlang zweier Seiten, nämlich entlang der nicht angeschrägten Nutseiten, am Spannsegment 21 an. Dabei drückt er aufgrund seines entsprechend groß gewählten Außendurchmessers über die Gleitfläche 34 das Material des Formabschnittes 36 gegen die angeschrägte Seite der Nut. Somit wird hier nicht nur eine formschlüssige, sondern auch eine kraftschlüssige Verbindung zwischen dem Distanzelement 30 und dem Spannsegment 21 geschaffen. Gemäß alternativer Ausgestaltungen könnte es dabei vorgesehen sein, dass die Ausnehmung 38 nur im wesentlichen dreiecksförmig ausgebildet und dass an der nicht angeschrägten Nutseite ebenfalls ein Teil des Formabschnittes 36 des elastomeren Materials des Distanzelementes 30 gegeben ist, der auf seiner Innenseite ebenfalls eine Gleichfläche aufweisen kann. So liegt der Spreizdorn 40 auf zwei Seiten an dem Distanzelement 30 an und lediglich zum Nutgrund hin an dem Spannsegment 21 an.

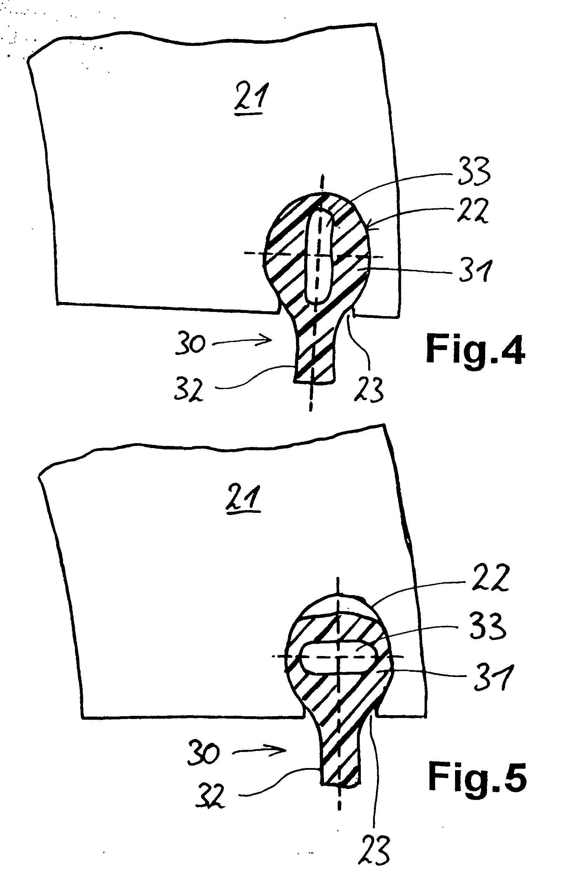

Die Fig. 4 und 5 zeigen eine weitere Ausführungsform einer erfindungsgemäßen kraft- und formschlüssigen Verbindung. In Fig. 4 ist dabei die Situation gezeigt, bei der nur eine formschlüssige Verbindung zwischen dem Distanzelement 30 und dem Spannsegment 21 hergestellt ist. In Fig. 5 ist auch der Kraftschluss der Verbindung hergestellt.

Fig. 4 zeigt ein Distanzelement 30 mit einem verdickten Endbereich 31 und einem Zwischenstück 32, das nur teilgeschnitten dargestellt ist und an dessen anderen Ende sich wieder ein verdickter Endbereich 31 anschließt. Das Spannsegment 21 weist eine Hinterschneidung 22 auf, die im wesentlichen oval geformt ist. Die Hinterschneidung kann auch langlochförmig ausgebildet sein. Jedoch ist die ovale, im wesentliche elliptische Form, mit ihren zwei voneinander beabstandeten Brennpunkten eine geeignete Ausbildungsform. Dabei definiert vorzugsweise die Verbindungslinie zwischen den beiden Brennpunkten eine erste Mittelsymmetrieebene, die sich auch im Bereich des Verbindungsstücks 32 fortsetzt. Eine zweite, senkrecht dazu stehende Symmetrieachse zwischen den beiden Brennpunkten der elliptischen Form definiert bezüglich der Form des verdickten Endbereiches ebenfalls eine Spiegelsymmetrieachse.

In jedem verdickten Endbereich 31 des Distanzelementes 30 ist eine langlochförmige Bohrung 33 ausgebildet. Die langlochförmige Bohrung weist dabei eine Bohrungslänge auf, die schmaler ist als die kürzere Hauptachse der elliptischen Hinterschneidung 22. Die Mitte der Langlochbohrung liegt dabei vorzugsweise mittig bezüglich der Hinterschneidung 22 und bezüglich der Mitte des verdickten Endbereiches 31. In die Bohrung 33 ist ein Spreizdorn 40 einführbar, beispielsweise entsprechend der Fig. 2. Hierbei ist jedoch zu achten, dass nunmehr eine bestimmte Ausrichtung des Spreizdorn gegeben sein muss, der entsprechend der langlochartigen Ausbildung der Bohrung 33 ebenfalls langlochartig ausgebildet ist. Zur grafischen Vereinfachung wurde auf die zeichnerische Darstellung des Spreizdornes 40 in den Fig. 4 und 5 verzichtet.

Entsprechend der Beschreibung zu der Fig. 2 ist es dabei auch möglich, dass eine kegelartige Verjüngung des Langloches über dessen axiale Erstreckung hinweg gegeben ist. Die größte Weite des Kegels ist dabei, wiederum gemäß der Beschreibung zu der Fig. 2 an der oberen Außenseite, bei radialer Anordnung des Distanzelementes, also am radial äußeren Punkt, bei axialer Ausrichtung des Distanzelementes also an der Vorderseite der Spannzange gelegen.

Durch Verdrehen des Spreizdornes 40, der in die Bohrung 33 des Distanzelements 30 eingeführt ist, gelangt man von der in der linken Bildhälfte dargestellten Situation in die in der rechten Bildhälfte dargestellte Situation. Durch elastisches Verformen des Materials des Distanzelementes 30 wird zunächst die Ausrichtung des Langloches zwangsweise geändert. Da sich der Abstand zwischen dem Rand der Hinterschneidung 22 und dem Beginn des Spreizdorns 40 in Breitenrichtung gesehen im Verdickungsbereich verringert, wird durch diese elastische Verformung und die Änderung der Ausrichtung des Langloches eine kraftschlüssige Verbindung zwischen dem Distanzelement 30 und der Hinterschneidung 22 hergestellt. Dabei ist es vorzugsweise so, dass das Langloch 33 länger ist als die Öffnungsweite der Öffnung 23 der Hinterschneidung 22. Damit kann das Distanzelement 30 nur, wenn das Material des Distanzelementes reißt, aus der Hinterschneidung entfernt werden. Aber auch hier ist noch die klemmende Halterung des Materials zwischen dem Spreizdorn 40 und dem Rand der Hinterschneidung gegeben. So kann dieser Prozess lediglich dann stattfinden, wenn die kraftschlüssige Verbindung aufgelöst wird.

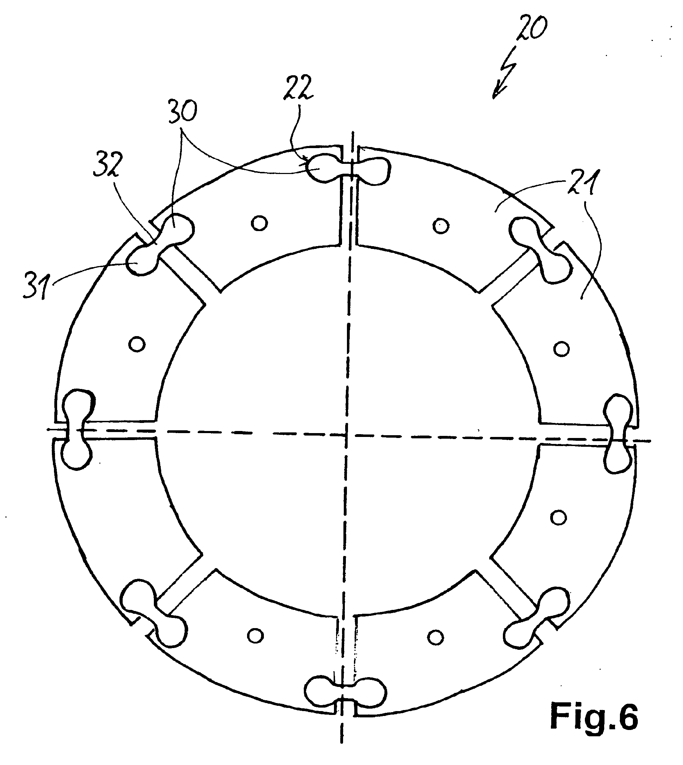

Die Fig. 6 zeigt in schematischer Draufsicht eine Spannzange 20, die aus insgesamt acht Spannsegmenten 21 besteht, wobei jeweils zwischen zwei Spannsegmenten ein Distanzelement 30 angeordnet ist. Es sind insgesamt also ebenfalls acht Distanzelemente 30 vorgesehen. Gemäß der skizzierten zeichnerischen Darstellung fanden Distanzelemente Verwendung, wie sie auch in den Fig. 4 und 5 dargestellt sind. Es könnte hierbei jedoch auch jede andere Form von Distanzelementen, insbesondere eine der vorbeschriebenen, verwendet werden.

## Patentansprüche

1. Distanzelement zur formschlüssigen Verbindung von zwei einander benachbarten Spannsegmenten (21) einer Spannzange (20), mit zwei an einander gegenüberliegenden Seiten eines Verbindungssegmentes (32) ausgebildeten Formabschnitten (31, 36), wobei das Distanzelement (30) aus elastomerem Material besteht, **dadurch gekennzeichnet, dass** die Formabschnitte (31, 36) jeweils wenigstens eine Ausnehmung zum Einführen je eines aufweitenden Elements (40), insbesondere eines Spreizdorns, aufweisen.

2. Distanzelement nach Anspruch 1, **dadurch gekennzeichnet, dass** an den Ausnehmungen Gleitflächen (34) vorgesehen sind.

3. Distanzelement nach Anspruch 2, **dadurch gekennzeichnet, dass** die Gleitflächen (34) im Kontaktbereich zum Spreizdorn (40) ausgebildet sind.

4. Distanzelement nach Anspruch 2 oder 3, **dadurch gekennzeichnet, dass** die Gleitflächen (34) aus nicht elastomerem, vorzugsweise metallischem, Material ausgebildet sind.

5. Distanzelement nach einem der Ansprüche 2 bis 4, **dadurch gekennzeichnet, dass** die Gleitflächen (34) im Bereich der Ausnehmungen an den Distanzelementen (30) unlösbar befestigt sind, insbesondere angeklebt oder anvulkanisiert sind.

6. Distanzelement nach einem der Ansprüche 2 bis 5, **dadurch gekennzeichnet, dass** die Gleitflächen als zusammenhängendes und einstückiges Zwischenstück (34) ausgebildet sind.

7. Distanzelement nach Anspruch 6, **dadurch gekennzeichnet, dass** das Zwischenstück (34) als im Querschnitt elliptisches, insbesondere kreisförmiges, Rohr ausgebildet ist, das einen sich in axialer Richtung erstreckenden Schlitz (35) aufweist, wobei vorzugsweise der Schlitz spiralig über die Länge des Rohres gewendelt ist.

8. Distanzelement nach einem der vorhergehenden Ansprüche, **dadurch gekennzeichnet, dass** das Distanzelement (30) im Querschnitt knochenförmig ausgebildet ist, wobei die verdickten Endbereiche (31) die Formabschnitte (36) bilden, wobei der Steg zwischen den Formabschnitten (36) das Verbindungsstück (32) bildet, wobei jeder verdickte Endbereich (31) eine als mittig angeordnete, den Endbereich axial durchsetzende elliptische, insbesondere langlochförmige oder kreisförmige, Bohrung ausgebildet ist, an deren Innenseite ein rohrförmiges, axial geschlitztes Zwischenstück (34) angeordnet ist.

9. Spannzange, insbesondere für das Aufspannen von Werkstücken, mit wenigstens zwei Spannsegmenten (20), wobei:
- benachbarte Spannsegmente mittels elastischer Distanzelemente (30) miteinander verbunden sind,
- an den Spannsegmenten Hinterschneidungen (22) ausgebildet sind,
- die Distanzelemente (30) Formabschnitte zum formschlüssigen Eingriff in die Hinterschneidungen der Spannsegmente aufweisen,
**dadurch gekennzeichnet, dass** ein aufweitendes Element vorgesehen ist, wobei das aufweitende Element (40) im Bereich der Hinterschneidungen (22) einführbar ist, und wobei das aufweitende Element eine kraftschlüssige Verbindung zwischen wenigstens einem Spannsegment (20) und wenigstens einem Distanzelement (30) herstellt.

10. Spannzange nach Anspruch 9, **dadurch gekennzeichnet, dass** das aufweitende Element als Spreizdorn (40) ausgebildet ist, wobei zwischen Spreizdorn und Distanzelement (30) Gleitflächen (34), insbesondere in Form eines einteilig ausgebildeten Zwischenstückes (34), vorgesehen sind, wobei vorzugsweise die Gleitflächen (34) aus einem nicht elastomeren Material bestehen.

11. Spannzange nach Anspruch 9 oder 10, **dadurch gekennzeichnet, dass** der Spreizdorn (40) zwischen Spannsegment (21) und Distanzelement (30) im Bereich der Hinterschneidung (22) gehalten ist und die kraftschlüssige Verbindung zwischen Spannsegment (21) und Distanzelement (30) herstellt.

12. Spannzange nach einem der Ansprüche 9 bis 11, **dadurch gekennzeichnet, dass** das Distanzelement (30) eine Ausnehmung aufweist, wobei der Spreizdorn (40) in die Ausnehmung einführbar ist und in der Ausnehmung vollständig von dem Distanzelement (30) umschlossen ist.

13. Spannzange nach Anspruch 12, **dadurch gekennzeichnet, dass** die kraftschlüssige Verbindung mittels des Spreizdorns (40) durch elastisches Verformen hergestellt ist.

14. Spannzange nach einem der Ansprüche 9 bis 13, **dadurch gekennzeichnet, dass** jeweils zwischen zwei benachbarten Spannsegmenten (21) ein Distanzelement (30) angeordnet ist, wobei das Distanzelement in jedem der beiden Spannsegmente (21) form- und kraftschlüssig gehalten ist.

15. Spannzange nach einem der Ansprüche 9 bis 14, **dadurch gekennzeichnet, dass** sie ein Distanzelement nach einem der Ansprüche 1 bis 8 aufweist.

## Claims

1. Spacer element for the positive connection of two adjacent clamping segments (21) of a collet chuck (20), with two shaped sections (31, 36) formed on facing sides of a connecting segment (32), the spacer element (30) being made from elastomeric material, **characterised in that** the shaped sections (31, 36) in each case have at least one recess for the introduction of in each case one widening element (40), particularly an expanding mandrel.

2. Spacer element according to claim 1, **characterised in that** sliding faces (34) are provided at the recesses.

3. Spacer element according to claim 2, **characterised in that** the sliding faces (34) are provided in the contact area to the expanding mandrel (40).

4. Spacer element according to either claim 2 or claim 3, **characterised in that** the sliding faces (34) are made from non-elastomeric, preferably metallic material.

5. Spacer element according to any one of claims 2 to 4, **characterised in that** the sliding faces (34) are non-detachably fixed and in particular bonded or vulcanised to the spacer elements (30) in the vicinity of the recesses.

6. Spacer element according to any one of claims 2 to 5, **characterised in that** the sliding faces are constructed as a cohesive, one-piece intermediate piece (34).

7. Spacer element according to claim 6, **characterised in that** the intermediate piece (34) is constructed as a cross-sectionally elliptical, particularly circular tube, which has a slot (35) extending in the axial direction and preferably the slot is spirally coiled over the tube length.

8. Spacer element according to any one of the preceding claims, **characterised in that** the spacer element (30) is cross-sectionally bone-shaped, the thickened end regions (31) forming the shaped sections (36), the web between the shaped sections (36) forming the connecting piece (32), each thickened end region (31) having a centrally positioned bore, which is elliptical, particularly elongated hole-shaped or circular and which axially traverses the end region and on the inside thereof is located a tubular, axially slotted intermediate piece (34).

9. Collet chuck, particularly for chucking workpieces, with at least two clamping segments (20), in which:
- adjacent clamping segments are interconnected by elastic spacer elements (30),
- undercuts (22) are formed on the clamping segments,
- the spacer elements (30) have shaped sections for positive engagement in the undercuts of the clamping segments,
**characterised in that** a widening element (40) is provided and is insertable in the vicinity of the undercuts (22) and the widening element produces a frictional connection between at least one clamping segment (20) and at least one spacer element (30).

10. Collet chuck according to claim 9, **characterised in that** the widening element is constructed as an expanding mandrel (40) and between the expanding mandrel and spacer element (30) are provided sliding faces (34), particularly in the form of a one-piece intermediate piece (34) and preferably the sliding faces (34) are made from a non-elastomeric material.

11. Collet chuck according to either claim 9 or claim 10, **characterised in that** the expanding mandrel (40) is held in the vicinity of the undercut (22) between the clamping segment (21) and spacer element (30) and produces the frictional connection between clamping segment (21) and spacer element (30).

12. Collet chuck according to any one of claims 9 to 11, **characterised in that** the spacer element (30) has a recess, into which the expanding mandrel (40) can be introduced and in the recess is completely embraced by the spacer element (30).

13. Collet chuck according to claim 12, **characterised in that** the frictional connection by means of the expanding mandrel (40) is produced by elastic deformation.

14. Collet chuck according to any one of claims 9 to 13, **characterised in that** in each case between two adjacent clamping segments (21) is provided a spacer element (30), which is positively and non-positively held in each of the two clamping segments (21).

15. Collet chuck according to any one of claims 9 to 14, **characterised in that** it has a spacer element according to any one of claims 1 to 8.

## Revendications

1. Élément écarteur pour la jonction en coopération de formes de deux segments de serrage mutuellement voisins (21) d'une pince de serrage (20), comportant deux portions de formage (31, 36) réalisées sur des côtés opposés d'un segment de liaison (32), l'élément écarteur (30) étant constitué d'un matériau élastomère, **caractérisé en ce que** les portions de formage (31, 36) présentent chacune au moins un évidement pour introduire un élément d'évasement (40), en particulier un mandrin d'écartement.

2. Élément écarteur selon la revendication 1, **caractérisé en ce que** des surfaces de glissement (34) sont prévues dans les évidements.

3. Élément écarteur selon la revendication 2, **caractérisé en ce que** les surfaces de glissement (34) sont réalisées dans la zone de contact vers le mandrin d'écartement (40).

4. Élément écarteur selon la revendication 2 ou 3, **caractérisé en ce que** les surfaces de glissement (34) sont réalisées d'un matériau non élastomère, de préférence métallique.

5. Élément écarteur selon l'une des revendications 2 à 4, **caractérisé en ce que** les surfaces de glissement (34) sont fixées de façon inamovible sur les éléments écarteurs (30) dans la zone des évidements, en particulier par collage ou par vulcanisation.

6. Élément écarteur selon l'une des revendications 2 à 5, **caractérisé en ce que** les surfaces de glissement sont réalisées sous forme d'élément intermédiaire (34) cohérent et d'un seul tenant.

7. Élément écarteur selon la revendication 6, **caractérisé en ce que** l'élément intermédiaire (34) est réalisé sous la forme d'un tube de section elliptique, en particulier circulaire, qui présente une fente (35) qui s'étend dans la direction axiale, la fente étant de préférence ménagée en spiral sur la longueur du tube.

8. Élément écarteur selon l'une des revendications précédentes, **caractérisé en ce que** l'élément écarteur (30) est réalisé avec une section en forme d'haltère, les zones d'extrémité renflées (31) formant les portions de formage (36), l'âme entre les portions de formage (36) constituant l'élément de liaison (32), chaque zone d'extrémité renflée (31) étant réalisée sous la forme d'un perçage elliptique, en particulier allongé ou circulaire, ménagé au centre et traversant axialement la zone d'extrémité, perçage sur le côté intérieur duquel est agencé un élément intermédiaire tubulaire (34) axialement fendu.

9. Pince de serrage, en particulier pour serrer des pièces à oeuvrer, comportant au moins deux segments de serrage (20), dans laquelle
- des segments de serrage voisins sont reliés l'un à l'autre par des éléments écarteurs élastiques (30),
- des contre-dépouilles (22) sont réalisées sur les segments de serrage,
- les éléments écarteurs (30) présentent des portions de formage pour l'engagement en coopération de formes dans les contre-dépouilles des segments de serrage,
**caractérisée en ce qu'**il est prévu un élément d'évasement, l'élément d'évasement (40) pouvant être introduit dans la zone des contre-dépouilles (22), et l'élément d'évasement établissant une liaison en coopération de forces entre au moins un segment de serrage (20) et au moins un élément écarteur (30).

10. Pince de serrage selon la revendication 9, **caractérisée en ce que** l'élément d'évasement est réalisé sous la forme d'un mandrin d'écartement (40), des surfaces de glissement en particulier sous la forme d'un élément intermédiaire (34) réalisé d'un seul tenant étant prévues entre le mandrin d'écartement et l'élément écarteur (30), les surfaces de glissement (34) étant constituées de préférence d'un matériau non élastomère.

11. Pince de serrage selon la revendication 9 ou 10, **caractérisée en ce que** le mandrin d'écartement (40) entre le segment de serrage (21) et l'élément écarteur (30) est maintenu dans la zone de la contre-dépouille (22) et établit la liaison en coopération de forces entre le segment de serrage (21) et l'élément écarteur (30).

12. Pince de serrage selon l'une des revendications 9 à 11, **caractérisée en ce que** l'élément écarteur (30) présente un évidement, le mandrin d'écartement (40) pouvant être introduit dans l'évidement et étant entouré complètement par l'élément écarteur (30) dans l'évidement.

13. Pince de serrage selon la revendication 12, **caractérisée en ce que** la liaison en coopération de forces est établie au moyen du mandrin d'écartement (40) par déformation élastique.

14. Pince de serrage selon l'une des revendications 9 à 13, **caractérisée en ce qu'**un élément écarteur (30) respectif est agencé entre deux segments de serrage voisins (21), l'élément écarteur étant maintenu en coopération de formes et de forces dans chacun des deux segments de serrage (21).

15. Pince de serrage selon l'une des revendications 9 à 14, **caractérisée en ce qu'**elle comprend un élément écarteur selon l'une des revendications 1 à 8.
